# EUROPÄISCHE PATENTANMELDUNG

(11) **EP 3 318 774 A1**
(43) Veröffentlichungstag der Anmeldung: **09.05.2018**
(21) Anmeldenummer: 17001698.4
(22) Anmeldetag: 13.10.2017
(51) Int. Cl.: F16D 1/02, F16D 1/094

(54) **VERBINDUNGSANORDNUNG ZUM VERBINDEN EINER WELLE MIT EINEM BAUTEIL**

(30) Priorität: 04.11.2016 DE 102016013076
(71) Anmelder: Neumayer Tekfor Engineering GmbH, 77756 Hausach (DE)
(72) Erfinder: Etzold, Thomas, 77654 Offenburg (DE)

(57) **Zusammenfassung**

Die Erfindung bezieht sich auf eine Verbindungsanordnung zum Verbinden einer Welle (1) mit einem Bauteil (2). Eine kegelige Außenfläche (30) eines inneren Rings (3) und eine kegelige Innenfläche (40) eines äußeren Rings (4) sind zueinander korrespondierend ausgestaltet. Der äußere Ring (4) umfasst den inneren Ring (3). Eine Überwurfmutter (5) umfasst den äußeren Ring (4) und das Gewindestück (6). Die Überwurfmutter (5) weist ein Innengewinde (50) und das Gewindestück (6) weist ein Außengewinde (60) auf, wobei die Innengewinde (50, 60) zueinander korrespondierend ausgestaltet sind.

## Beschreibung

Die vorliegende Erfindung betrifft eine Verbindungsanordnung zum Verbinden einer Welle mit einem Bauteil.

Eine Verbindungsanordnung zwischen einem Wellenzapfen und einem Gelenkteil als Bauteil offenbaren beispielsweise die DE 10 2007 038 878 A1 oder die EP 1 519 063 A2. Dabei werden eine Überwurfmutter und eine Wellenmutter, die mit dem Gelenkteil bzw. dem Wellenzapfen verbunden sind, miteinander verschraubt.

Die DE 1 185 424 zeigt eine Verbindungsanordnung einer Welle mit einer Nabe, wobei ein Außen- und ein Innenring verwendet werden. Die beiden Ringe verfügen dabei über korrespondierende kegelige Innen- bzw. Außenflächen. Eine Spannhülse mit kegeligen bzw. konischen Konturen offenbart die DE 10 2005 022 711 B3.

Der DE 1 943 790 A lässt sich die Verbindung zwischen einer Welle und einem die Welle aufnehmenden Aufnahmeteil entnehmen. Das Aufnahmeteil verfügt dabei über einen Gewindeabschnitt und Segmente mit einer kegelstumpfförmigen Oberfläche. Die Verbindung wird erzeugt über eine Hülse, die auf den Gewindeabschnitt aufgeschraubt wird, und einen Ring mit einer kegelstumpfförmigen Innenfläche, der sich zwischen der Hülse und den Segmenten befindet. Für diese Verbindung ist somit ein aufwändig zu fertigendes Aufnahmeteil erforderlich.

Die Aufgabe der Erfindung besteht darin, eine zum Stand der Technik alternative Verbindungsanordnung vorzuschlagen.

Die Erfindung löst die Aufgabe mit einer Verbindungsanordnung zum Verbinden einer Welle mit einem Bauteil. Die Verbindung bezieht sich dabei beispielsweise auf die Verbindung eines Bauteils mit dem Wellenzapfen einer Welle. Das Bauteil ist beispielsweise ein Gelenkteil. Die Verbindungsanordnung ist in einer Variante mittelbar oder unmittelbar mit einem Motor verbunden und/oder ist in einer beispielhaften Ausgestaltung Teil des Antriebsstrangs eines Fahrzeugs.

Die Verbindungsvorrichtung weist einen inneren Ring, einen äußeren Ring, eine Überwurfmutter und ein Gewindestück auf. Der innere Ring weist eine kegelige Außenfläche und der äußere Ring eine kegelige Innenfläche auf. Die kegelige Außenfläche des inneren Rings und die kegelige Innenfläche des äußeren Rings sind zueinander korrespondierend ausgestaltet. Der äußere Ring und der innere Ring sind derartig ausgestaltet und aufeinander abgestimmt, dass der äußere Ring den inneren Ring zumindest teilweise umfasst. Die Überwurfmutter und der äußere Ring sind derartig ausgestaltet und aufeinander abgestimmt, dass die Überwurfmutter den äußeren Ring zumindest teilweise umfasst. Die Überwurfmutter und das Gewindestück sind derartig ausgestaltet und aufeinander abgestimmt, dass die Überwurfmutter das Gewindestück zumindest teilweise umfasst. Weiterhin weist die Überwurfmutter ein Innengewinde und das Gewindestück ein Außengewinde auf. Schließlich sind das Innengewinde der Überwurfmutter und das Außengewinde des Gewindestücks zueinander korrespondierend ausgestaltet.

Die Verbindungsanordnung erlaubt die Verbindung einer Welle oder eines Wellenzapfens als Endbereich einer Welle mit einem Bauteil, bei dem es sich beispielsweise um ein Gelenkteil handelt. Dabei wird eine axiale Sicherung zwischen Welle und Bauteil erzeugt. Ein innerer und ein äußerer Ring weisen jeweils eine kegelige Außenfläche auf, wobei beide kegelige Außenflächen korrespondierend zueinander ausgestaltet sind, d. h. sie haben beispielsweise einander entsprechende Steigungen. Die beiden Ringe werden zumindest teilweise von einer Überwurfmutter umfasst. Die Überwurfmutter ist über korrespondierende Gewinde mit einem Gewindestück vorzugsweise reversibel lösbar verbunden. Der innere Ring dient in einer Ausgestaltung einer reibschlüssigen Verbindung mit der Welle. Für die Verbindung weist die Welle vorzugsweise zumindest in dem Bereich, in dem der innere Ring aufliegt, einen kreiszylindrischen Abschnitt auf.

Eine Ausgestaltung sieht vor, dass das Gewindestück und der äußere Ring derartig ausgestaltet und aufeinander abgestimmt sind, dass das Gewindestück den äußeren Ring zumindest teilweise umfasst. In einer weiteren Ausgestaltung ist vorgesehen, dass die Überwurfmutter, das Gewindestück und der äußere Ring derartig ausgestaltet und aufeinander abgestimmt sind, dass das Gewindestück zumindest teilweise zwischen der Überwurfmutter und dem äußeren Ring - in radialer Richtung - angeordnet ist. Befindet sich das Gewindestück in radialer Richtung zwischen dem äußeren Ring und der Überwurfmutter, so befindet sich gleichzeitig der äußere Ring in radialer Richtung zwischen dem inneren Ring und dem Gewindestück.

Das Gewindestück dient in einer Ausgestaltung dazu, dass bei einer reibschlüssigen Verbindung, die insbesondere zwischen dem inneren Ring und der Welle erzeugt wird, im Wesentlichen nur axiale Kräfte auf die Welle übertragen werden. Somit treten im Wesentlichen keine Kerbwirkungen auf.

Das Umfassen in den verschiedenen Ausgestaltungen bezieht sich insbesondere auf die relative Anordnung der betrachteten Komponenten in radialer Richtung, die damit zumeist auch mit einer wenigstens teilweisen Überdeckung der betroffenen Komponenten der Verbindungsanordnung einhergeht. Das Umfassen kann zudem mittelbar oder unmittelbar sein, so dass sich je nach Ausgestaltung noch wenigstens ein weiteres Element zwischen zwei Elementen befindet, von denen das eine das andere umfasst. Weiterhin bezieht sich das Umfassen auf den montierten Zustand, d. h. auf den Zustand, in dem die Verbindung zwischen der Welle und dem Bauteil erzeugt ist.

In einer Ausgestaltung sind zumindest einige der Komponenten der Verbindungsvorrichtung im Wesentlichen rotationssymmetrisch ausgestaltet.

In einer Ausgestaltung ist vorgesehen, dass die Überwurfmutter, das Gewindestück, der äußere Ring und der innere Ring so ausgestaltet und aufeinander abgestimmt sind, dass die Überwurfmutter beim Erzeugen einer Schraubverbindung mit dem Gewindestück den äußeren Ring axial entlang einer Längsachse in Richtung des Gewindestücks bewegt. In dieser Ausgestaltung schiebt somit die Überwurfmutter den äußeren Ring in Richtung des Gewindestücks, wenn die Überwurfmutter mit dem Gewindestück verschraubt wird. Die Längsachse ist dabei in einer Ausgestaltung die Symmetrieachse einiger der Komponenten der Verbindungsanordnung und/oder ist in einer weiteren Ausgestaltung eine Längsachse der Welle und/oder des Bauteils.

In einer Ausgestaltung ist das Bewegen des äußeren Rings auch damit verbunden, dass die kegeligen Außenflächen des äußeren und des inneren Rings miteinander verkeilt werden, so dass also der äußere Ring so relativ zu dem inneren Ring verschoben wird, dass der äußere Ring den inneren Ring in radialer Richtung (also in einer Richtung senkrecht zur Längsachse, die z. B. die Längsachse der Welle ist) überdeckt. Der innere Ring ist dabei vorzugsweise - z. B. über einen Reibwert einer der Welle zugewandten Auflageseite - derartig ausgestaltet, dass sich der innere Ring im Wesentlichen nicht bewegt, so dass also der äußere Ring auf den inneren Ring aufgeschoben werden kann.

In einer Ausgestaltung sind das Gewindestück und der innere Ring so ausgestaltet und ist vorzugsweise der innere Ring so dimensioniert, dass das Gewindestück eine Bewegung des inneren Rings in Richtung des Gewindestücks beschränkt. In einer Ausgestaltung stößt daher der innere Ring an das Gewindestück an, so dass eine weitere Bewegung des inneren Rings in Richtung des Gewindestücks verhindert ist.

Eine Ausgestaltung beinhaltet, dass der innere Ring eine Innenseite aufweist und dass die Innenseite des inneren Rings für eine - mittelbare oder unmittelbare - Kontaktierung der Welle ausgestaltet ist.

In einer Ausgestaltung ist vorgesehen, dass das Gewindestück eine Innenseite aufweist und dass die Innenseite des Gewindestücks für eine Kontaktierung der Welle und/oder des Bauteils ausgestaltet ist. In einer Ausgestaltung ist das Gewindestück derartig ausgestaltet und auf die Welle abgestimmt, dass die Innenseite des Gewindestücks im montierten Zustand auf der Welle aufliegt. In einer Ausgestaltung liegt die Innenseite des Gewindestücks nur auf der Welle und nicht auf dem Bauteil auf. Dabei liegt in einer Ausgestaltung das Gewindestück auf dem äußeren Ring auf. In einer alternativen Ausgestaltung besteht zwischen dem Gewindestück und dem äußeren Ring ebenfalls ein Freiraum.

Eine Ausgestaltung beinhaltet, dass das Gewindestück derartig ausgestaltet und mit der Welle und dem Bauteil abgestimmt ist, dass sich zwischen der Innenseite des Gewindestücks und der Welle und zwischen der Innenseite des Gewindestücks und dem Bauteil jeweils eine Spielpassung befindet. Eine Spielpassung ist eine Passung als Maßangabe für zwei gepaarte Teile, bei denen zwischen den Teilen noch ein als Spiel bezeichneter Bewegungsfreiraum für eine Bewegung der Teile gegeneinander vorliegt.

In einer Ausgestaltung ist vorgesehen, dass das Gewindestück derartig ausgestaltet und mit dem Bauteil abgestimmt ist, dass die Innenseite des Gewindestücks und das Bauteil eine Spielpassung zwischen einander aufweisen. Durch die Spielpassung wird erreicht, dass eine rotatorische Entkopplung zwischen dem Gewindestück und dem Bauteil gegeben ist. Das Gewindeteil, das der Verbindung zwischen Welle und Bauteil dient und das mit der Überwurfmutter verschraubt ist, erfährt somit kein Drehmoment von dem Gewindestück.

In einer Ausgestaltung ist vorgesehen, dass das Gewindestück derartig ausgestaltet und mit der Welle abgestimmt ist, dass die Innenseite des Gewindestücks und die Welle eine Spielpassung zwischen einander aufweisen.

Eine Ausgestaltung beinhaltet, dass das Gewindestück eine Aussparung zur teilweisen Aufnahme eines Sicherungsrings aufweist. Ein Sicherungsring oder auch Nutenring dient im Allgemeinen der axialen Sicherung von Komponenten gegeneinander. Ein Sicherungsring lässt sich beispielsweise durch einen Sprengring oder einen Schnappring realisieren. In einer Ausgestaltung verfügt auch das Bauteil über eine Aussparung, so dass der Sicherungsring sich zwischen der (Sicherungsring-)Aussparung des Gewindestücks und der (Sicherungsring-)Aussparung des Bauteils befindet. In einer Ausgestaltung befindet sich die (Sicherungsring-)Aussparung des Gewindestücks außerhalb des axialen Bereichs entlang einer Längsachse, der von der Überwurfmutter überdeckt wird. Die Aussparung ist somit beispielhaft der Überwurfmutter axial vorgelagert.

In einer Ausgestaltung ist vorgesehen, dass der äußere Ring entlang einer Längsachse einen ersten Abschnitt und einen zweiten Abschnitt aufweist. Dabei sind der äußere Ring, die Überwurfmutter und das Gewindestück in einer Ausgestaltung derartig ausgestaltet und aufeinander abgestimmt, dass das Gewindestück im Bereich des zweiten Abschnitts zwischen dem äußeren Ring und der Überwurfmutter angeordnet ist.

Eine Ausgestaltung beinhaltet, dass der erste Abschnitt des äußeren Rings einen größeren Außenradius als der zweite Abschnitt des äußeren Rings aufweist. Diese Ausgestaltung dient in einer Ausgestaltung vorzugsweise dafür, dass sich der zweite Abschnitt als Teil des äußeren Rings zumindest im montierten Zustand, in dem die Überwurfmutter mit dem Gewindestück verschraubt ist, radial unterhalb des Gewindestücks befindet. Der radial durch seinen Außendurchmesser weiter nach außen ragende erste Abschnitt wird in einer Ausgestaltung dafür genutzt, dass die Überwurfmutter auf den äußeren Ring einwirken und ihn dadurch beim Verschrauben bewegen kann.

In einer Ausgestaltung sind der äußere Ring und der innere Ring so angeordnet, dass die kegelige Außenfläche des inneren Rings und die kegelige Innenfläche des äußeren Rings sich von dem Gewindestück ausgehend in Richtung der Längsachse annähern.

In einer Ausgestaltung ist vorgesehen, dass der äußere Ring ein höheres E-Modul als der innere Ring aufweist. Das E-Modul oder Elastizitätsmodul ist dabei ein Materialkennwert, der das Verhalten eines Körpers bei Verformung beschreibt. Ein höherer Betrag bedeutet dabei einen größeren Widerstand eines Materials gegen elastische Verformungen. Insofern der äußere Ring durch sein E-Modul stabiler als der innere Ring ist, wird in einer Ausgestaltung beim Herstellen der Verbindung und beim Schieben des äußeren Rings relativ zum inneren Ring hauptsächlich der innere Ring in seinem Durchmesser verdünnt. Hierdurch übt der innere Ring eine Flächenpressung auf die radial unterhalb von ihm befindliche Welle aus. Es wird somit Reibschluss zwischen innerem Ring und Welle erzeugt.

Eine Ausgestaltung beinhaltet, dass der äußere Ring eine Armierung aufweist. Eine Armierung oder auch Bewehrung ist dabei eine Verstärkung des äußeren Rings durch ein weiteres Objekt, das hier insbesondere ein höheres E-Modul aufweist, um somit insgesamt das E-Modul des äußeren Rings gegenüber dem inneren Ring zu erhöhen. Dabei weist die Armierung in einer Ausgestaltung ein geringeres spezifisches Gewicht als der äußere Ring auf, so dass sich durch die Armierung eine Gewichtsreduktion ergibt. In einer Ausgestaltung besteht die Armierung bzw. genauer das der Armierung dienende Bauteil aus Kohlefaser.

In einer Ausgestaltung ist vorgesehen, dass das Gewindestück einen ersten becherartigen Abschnitt und einen zweiten becherartigen Abschnitt aufweist. Dabei umfasst der erste becherartige Abschnitt das Bauteil zumindest teilweise und umfasst der zweite becherartige Abschnitt den äußeren und/oder inneren Ring zumindest teilweise. Die becherartigen Abschnitte weisen dabei die durchgehende Aussparung auf, durch die zumindest die Welle hindurchragt. In einer Ausgestaltung liegen sich die - mit der Aussparung versehenen - Böden der becherartigen Abschnitte gegenüber bzw. werden durch das gleiche Teil des Gewindestücks gebildet.

Eine Ausgestaltung beinhaltet, dass der erste becherartige Abschnitt und der zweite becherartige Abschnitt unterschiedliche Innendurchmesser aufweisen. So hat in einer Ausgestaltung der den äußeren Ring und damit vorzugsweise auch die Welle umfassende zweite becherartige Abschnitt einen größeren Innendurchmesser als der erste becherartige Abschnitt. Die Innendurchmesser beziehen sich dabei jeweils auf die Innenseite der Umrandung, die den Becher bildet.

In einer Ausgestaltung ist vorgesehen, dass die Überwurfmutter stirnseitig einen Endabschnitt mit einer Aussparung aufweist. Dabei ist der Innendurchmesser der Aussparung des Endabschnitts kleiner als ein Innendurchmesser des Innengewindes der Überwurfmutter. Die Überwurfmutter verfügt somit stirnseitig über einen radial nach innen ragenden Abschnitt, der eine durchgehende Aussparung in einer Ausgestaltung zumindest zum Durchführen der Welle aufweist.

Eine Ausgestaltung beinhaltet, dass der äußere Ring entlang einer Längsachse einen ersten Abschnitt, einen zweiten Abschnitt und einen dritten Abschnitt aufweist. Dabei liegt entlang der Längsachse der erste Abschnitt zwischen dem zweiten Abschnitt und dem dritten Abschnitt.

In einer Ausgestaltung ist vorgesehen, dass die Überwurfmutter und der äußere Ring so ausgestaltet und aufeinander abgestimmt sind, dass der dritte Abschnitt des äußeren Rings in der axialen Richtung, die von dem Gewindestück abgewandt ist, über die Überwurfmutter hinausragt. Die radiale Erstreckung bzw. Lage der Komponenten bzw. deren Bestanteile bezieht sich dabei insbesondere auf den montierten Zustand.

In einer Ausgestaltung ist insbesondere vorgesehen, dass der erste Abschnitt des äußeren Rings derartig ausgestaltet ist, dass die Überwurfmutter eine Angriffs- oder Wirkfläche hat, über die die Überwurfmutter den äußeren Ring beim Vorgang des Verschraubens von Überwurfmutter und Gewindestück in Richtung des Gewindestücks bewegt. Daher sieht es eine Ausgestaltung vor, dass der erste Abschnitt einen Endabschnitt des äußeren Rings bildet. In einer alternativen Ausgestaltung überragt der erste Abschnitt den dritten Abschnitt in radialer Richtung. Dabei bildet dann der dritte Abschnitt einen Endabschnitt des äußeren Rings.

Eine Ausgestaltung beinhaltet, dass der dritte Abschnitt des äußeren Rings eine Sicherungsring-Aussparung für einen Sicherungsring aufweist. Die Sicherungsring-Aussparung befindet sich dabei in einer Ausgestaltung auf einer von der Längsachse abgewandten Seite.

In einer Ausgestaltung befindet sich die Sicherungsring-Aussparung insbesondere in dem Bereich des dritten Abschnitts des äußeren Rings, der gesehen vom Gewindestück über die Überwurfmutter hinausragt - also in eine Richtung, die vom Gewindestück abgewandt ist.

In einer Ausgestaltung ist vorgesehen, dass der äußere Ring, der Sicherungsring in der Sicherungsring-Aussparung des dritten Abschnitts und die Überwurfmutter derartig ausgestaltet und aufeinander abgestimmt sind, dass die Überwurfmutter und der äußere Ring entlang der Längsachse axial gegeneinander gesichert sind. In einer Ausgestaltung ist ergänzend noch der erste Abschnitt des äußeren Rings so ausgestaltet, dass die Überwurfmutter mit ihrem Endabschnitt axial zwischen dem ersten Abschnitt und dem Sicherungsring fixiert ist.

Eine Ausgestaltung beinhaltet, dass der äußere Ring und die Überwurfmutter derartig ausgestaltet und aufeinander abgestimmt sind, dass ein Außendurchmesser des dritten Abschnitts kleiner als der Innendurchmesser der Aussparung des Endabschnitts der Überwurfmutter ist. Diese Ausgestaltung erlaubt es, den dritten Abschnitt über die Überwurfmutter hinausragen zu lassen. Diese Ausgestaltung wird in einer weiteren Ausgestaltung damit verbunden, dass der erste Abschnitt einen größeren Außendurchmesser als der dritte Abschnitt aufweist. Diese Ausgestaltung ermöglicht es beispielsweise, dass die Überwurfmutter während des Verschraubens den äußeren Ring in Richtung des Gewindestücks bewegt.

In einer Ausgestaltung ist vorgesehen, dass der äußere Ring und die Überwurfmutter derartig ausgestaltet und aufeinander abgestimmt sind, dass sich im Bereich der Aussparung des Endabschnitts der Überwurfmutter zwischen der Überwurfmutter und dem dritten Abschnitt des äußeren Rings eine Dichtung befindet. In einer Ausgestaltung befindet sich die angesprochene Dichtung in axialer Richtung zwischen dem ersten Abschnitt des äußeren Rings und dem Sicherungsring in der Sicherungsring-Aussparung des dritten Abschnitts.

In einer Ausgestaltung ist vorgesehen, dass der dritte Abschnitt des äußeren Rings eine Dichtungsaussparung für eine Dichtung aufweist. Die Dichtungsaussparung befindet sich in einer Ausgestaltung auf einer der Welle zugewandten Seite des dritten Abschnitts und damit im Bereich einer Auflagefläche des äußeren Rings.

Eine Ausgestaltung beinhaltet, dass der innere Ring und das Gewindestück einteilig ausgestaltet sind. Diese Ausgestaltung vereinfacht den Zusammenbau der Verbindungsanordnung und auch eine Demontage, da weniger Teile vorhanden sind.

In einer Ausgestaltung ist vorgesehen, dass der innere Ring und das Gewindestück einteilig ausgestaltet sind, und dass der innere Ring, das Gewindestück und der äußere Ring derartig ausgestaltet und aufeinander abgestimmt sind, dass sich der äußere Ring zwischen dem inneren Ring und dem das Außengewinde des Gewindestücks tragenden Bereichs des Gewindestücks zumindest teilweise befindet. In einer Ausgestaltung umschließen der innere Ring und das Gewindestück eine im Schnitt U-förmige Kammer, in die der äußere Ring hineinragt.

Eine Ausgestaltung beinhaltet, dass das Gewindestück eine Aussparung zur zumindest teilweisen Aufnahme einer Dichtung aufweist. Diese Dichtung dient dabei in einer Ausgestaltung der Abdichtung des Bereichs zwischen Gewindestück und Welle oder zwischen Gewindestück und Bauteil.

In einer Ausgestaltung ist vorgesehen, dass der innere Ring mehrere umfänglich angeordnete Segmente aufweist, die durch Längsaussparungen entlang der Längsachse voneinander getrennt sind. Die Segmente erlauben es, hohe Klemmkräfte aufzubringen, wobei die Stützwirkung als plastische Verformung des inneren Rings vermieden wird.

Eine Ausgestaltung beinhaltet, dass die Welle und das Bauteil derartig ausgestaltet und aufeinander abgestimmt sind, dass die Welle zumindest teilweise in das Bauteil einbringbar ist. In dieser Ausgestaltung wird die Welle in das entsprechend ausgestaltete Bauteil eingeschoben.

In einer Ausgestaltung ist vorgesehen, dass das Bauteil eine Steckverzahnung zur Verbindung mit der Welle aufweist. Die Steckverzahnung dient dabei einer Fixierung von Bauteil und Welle zueinander und auch der Herstellung eines Drehmomentflusses zwischen Bauteil und Welle.

Im Einzelnen gibt es eine Vielzahl von Möglichkeiten, die erfindungsgemäße Vorrichtung auszugestalten und weiterzubilden. Dazu wird verwiesen einerseits auf die dem Patentanspruch 1 nachgeordneten Patentansprüche, andererseits auf die folgende Beschreibung von Ausführungsbeispielen in Verbindung mit der Zeichnung. Es zeigen:
- Fig. 1: eine geschnittene räumliche Darstellung einer erste Variante einer Verbindungsanordnung mit einem Bauteil und einem Teil einer Welle,
- Fig. 2: einen Teil eines Schnitts durch eine zweite Variante einer Verbindungsanordnung mit Bauteil und Welle,
- Fig. 3: einen Schnitt durch eine dritte Variante einer Verbindungsanordnung mit einem Bauteil und einem Teil einer Welle und
- Fig. 4: eine geschnittene räumliche Darstellung der ersten Variante der Verbindungsanordnung nur mit dem Bauteil und ohne Welle.

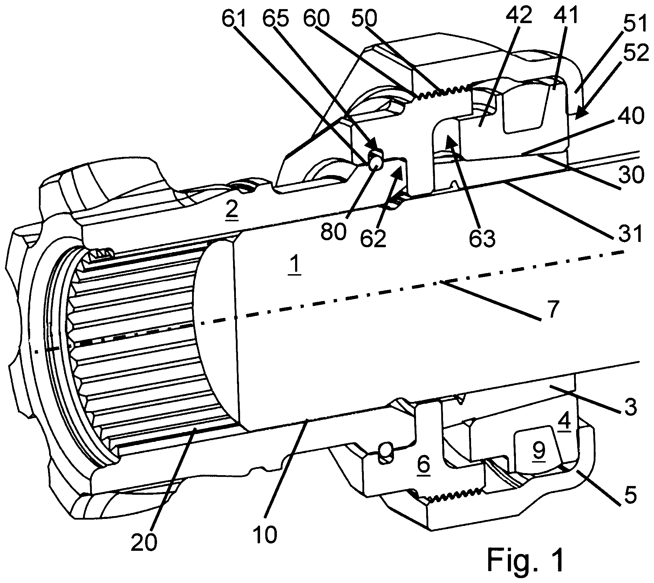

Die Fig. 1 zeigt eine erste Variante der Verbindungsanordnung. Dabei wird die Welle 1 in eine Aussparung eines Bauteils 2 eingebracht. Das Bauteil 2 ist in der gezeigten beispielhaften Anwendung ein Teil eines Gelenks. Das Bauteil 2 und die Welle 1 sind über korrespondierende Steckverzahnungen 20, 10 drehfest miteinander verbunden. Die Komponenten, die für die axiale Fixierung der Welle 1 gegenüber dem Bauteil 2 sorgen, sind der innere Ring 3, der äußere Ring 4, die Überwurfmutter 5 und das Gewindestück 6. Das Gewindestück 6 hat dabei eine Spielpassung zu dem Bauteil 2, so dass sich beide relativ zueinander drehen können. Das Gewindestück 6 sitzt andererseits auf der Welle 1 auf, gegen die auch der innere Ring 3 gepresst ist.

In radialer Richtung sind die Komponenten gesehen vom Auflagebereich des inneren Rings 3 auf der Welle 1 wie folgt angeordnet: zunächst kommt der innere Ring 3, über dem der äußere Ring 4 angeordnet ist. Der äußere Ring 4 wird teilweise vom Gewindestück 6 umfasst und grenzt teilweise direkt an die Überwurfmutter 5 an. Das Gewindestück 6 wiederum wird von der Überwurfmutter 5 umfasst.

Der innere Ring 3 weist eine kegelige (oder konische) Außenfläche 30 auf, die zu einer kegeligen Innenfläche 40 des äußeren Rings 4 korrespondiert. Weiterhin verfügt der innere Ring 3 über eine Innenfläche 31, die für die Kontaktierung der Welle 1 ausgestaltet ist. So ist beispielsweise die Innenfläche 31 so ausgestaltet, dass sie einen für eine Verbindung ausreichend hohen Reibwert aufweist. Weiterhin ist der innere Ring 3 so ausgestaltet, dass der innere Ring 3 bedingt durch seine axiale Länge an das Gewindestück 6 anstößt, wenn - wie in der Fig. 1 dargestellt - der montierte Zustand vorliegt. Zu erkennen ist auch ein Einschnitt auf der Innenseite 30 des inneren Rings 3. Dies ist der Bereich, von dem die im Folgenden zu besprechenden Segmente des inneren Rings 3 abzweigen.

Der äußere Ring 4 verfügt in der gezeigten Ausgestaltung auf der der Innenfläche 40 gegenüberliegenden Außenseite über einen ersten Abschnitt 41 und einen zweiten Abschnitt 42. Der zweite Abschnitt 42 verfügt dabei über einen solchen Außendurchmesser, dass der zweite Abschnitt 42 zwischen das Gewindestück 6 und den inneren Ring 3 passt. Der erste Abschnitt 41 verfügt über einen größeren Außenradius und befindet sich axial entlang der Längsachse 7 der Verbindungsanordnung bzw. der Welle 7 und des Bauteils 2 zwischen der Stirnseite des Gewindestücks 6 und einer Innenseite des Endabschnitts 51 der Überwurfmutter 5. Um das Elastizitätsmodul des äußeren Rings 4 gegenüber dem des inneren Rings 3 zu erhöhen und um das Gewicht des äußeren Rings 4 zu reduzieren, verfügt der äußere Ring 4 über eine Armierung 9.

Das Gewindestück 6 verfügt über ein Außengewinde 60, das korrespondierend zu dem Innengewinde 50 der Überwurfmutter 5 ausgestaltet ist, so dass sich Gewindestück 6 und Überwurfmutter 5 reversibel miteinander verschrauben lassen. Weiterhin verfügt das Gewindestück 6 über zwei becherartige Abschnitt 62, 63, die sich jeweils einen gemeinsamen Boden mit durchgehender Aussparung teilen. Der erste becherartige Abschnitt 62 umfasst dabei das Bauteil 2 und der zweite becherartige Abschnitt umfasst die Anordnung aus dem inneren Ring 3 und dem äußeren Ring 4 und damit auch die Welle 1. Die Außenseite der Seitenumrandung des ersten becherartigen Abschnitts 62 verfügt über eine Mehrkantform. Auf der Innenseite des ersten becherartigen Abschnitts 62 und damit auch auf der Innenseite 61 des Gewindestücks 6 befindet sich eine Aussparung 65 für einen Sicherungsring 80, der hier ebenfalls in einer Aussparung des Bauteils 2 ruht. Der Sicherungsring 80 sichert das Bauteil 2 und das Gewindestück 6 axial gegeneinander. Der zweite becherartige Abschnitt 63 weist auf der Außenseite der Seitenumrandung das Außengewinde 60 auf.

Die Überwurfmutter 5 verfügt über das Innengewinde 50 und über den Endabschnitt 51, in dem sich eine durchgehende Aussparung 52 befindet. Durch die Aussparung 52 ist die Welle 1 hindurchgeführt. Die Überwurfmutter 5 umfasst insgesamt den inneren Ring 3, den äußeren Ring 4 und einen Teil des Gewindestücks 6, nämlich zumindest den zweiten becherartigen Abschnitt 63.

Wird die Überwurfmutter 5 auf dem Gewindestück 6 aufgeschraubt, so wirkt die Innenseite der Stirnseite 51 der Überwurfmutter 5 auf den ersten Abschnitt 41 des äußeren Rings 4 ein und bewegt diesen axial entlang der Längsachse 7 in Richtung des Gewindestücks 6. Dabei sind die kegelige Außenfläche 30 des inneren Rings 3 und die kegelige Innenfläche 40 des äußeren Rings 4 so zueinander angeordnet, dass die Kegel oder Konusse einander entgegengerichtet sind. Daher wird hier der äußere Ring 4 auf dem inneren Ring 3 radial nach außen geschoben, da der Bereich des inneren Rings 3 mit größerem Außendurchmesser dem Gewindestück 6 zugewandt ist. Zudem wird noch der zweite Abschnitt 42 des äußeren Rings 4 unter die Umrandung des zweiten becherartigen Abschnitts 63 des Gewindestücks 6 geschoben. Durch das Verschrauben übt der äußere Ring 4 eine axiale Kraft auf den inneren Ring 3 aus, der damit axial gegenüber der Welle 1 befestigt wird.

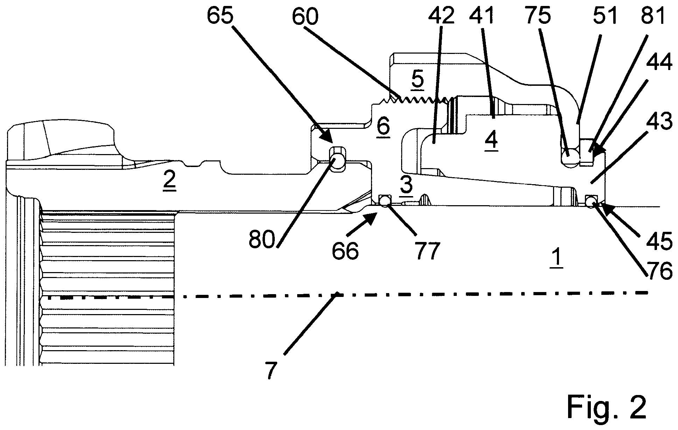

Die Variante der Verbindungsanordnung der Fig. 2 ähnelt der Variante der Fig. 1, so dass hier nur die Unterschiede beschrieben werden. Die Unterschiede sind dabei in weiteren - hier nicht dargestellten - Ausgestaltungen getrennt voneinander mit der Variante der Fig. 1 kombiniert.

Das Gewindestück 6 und der innere Ring 3 sind hier einteilig ausgestaltet, so dass also der Seitenrand des Gewindestücks 6, der das Außengewinde 60 trägt, und der innere Ring 3 über einen gemeinsamen Boden verbunden sind und eine U-Form aufweisen, in die der äußere Ring 4 hineinragt. Durch diese Ausgestaltung sind weniger Komponenten bei Montage und Demontage betroffen. Weiterhin verfügt das Gewindestück 6 bzw. verfügt die Einheit aus Gewindestück 6 und innerem Ring 3 über eine weitere Aussparung 66, in der sich eine Dichtung 77, die hier als Dichtring ausgestaltet ist, befindet.

In der gezeigten Ausgestaltung verfügt der äußere Ring 4 über drei Abschnitte, wobei der erste Abschnitt 41 zwischen dem zweiten Abschnitt 42 und dem dritten Abschnitt 43 axial entlang der Längsachse 7 angeordnet ist. Der erste Abschnitt 41 erfüllt hier (wie bei der Variante der Fig. 1) die Aufgabe, dass über ihn die Überwurfmutter 5 beim Verschrauben den äußeren Ring 4 in Richtung des Gewindestücks 6 bewegen kann. Dabei sind in einer alternativen Ausgestaltung (vgl. Fig. 1) das Gewindestück 6 und der innere Ring 3 separate Bauteile. Der dritte Abschnitt 43 ragt - vom Gewindestück 6 aus gesehen - über die Überwurfmutter 5 hinaus. Dies hat den Zweck, dass ein Sicherungsring 81, der sich in einer Sicherungsring-Aussparung 44 des dritten Abschnitts 43 befindet, die Überwurfmutter 5 axial gegenüber dem äußeren Ring 4 sichert. Somit kann sich die Überwurfmutter 5 nicht vom Gewindestück 6 losdrehen. Hierbei ist der Endabschnitt 51 der Überwurfmutter 5 axial zwischen dem ersten Abschnitt 41 des äußeren Rings 4 und dem Sicherungsring 81 in der Sicherungsring-Aussparung 44 fixiert.

Als Ergänzung befindet sich noch zwischen dem dritten Abschnitt 43 und der Innenseite der Aussparung des Endabschnitts 81 ein Dichtring als Dichtung 75. Ein weiteres Dichtelement 76 - z. B. in Form eines Dichtrings - ist hier ergänzend in einer zugehörigen Aussparung 45 des dritten Abschnitts 43 zwischen der Unterseite des äußeren Rings 4 und der Welle 1 angeordnet.

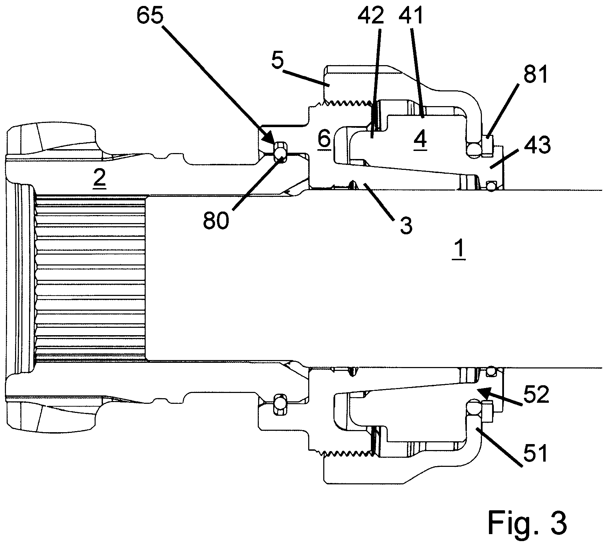

Die dritte Variante der Fig. 3 und die zweite Variante der Fig. 2 der Verbindungsanordnung unterscheiden sich darin voneinander, dass die dritte Variante im Bereich des Gewindestücks 6 keine Aussparung für ein Dichtelement aufweist.

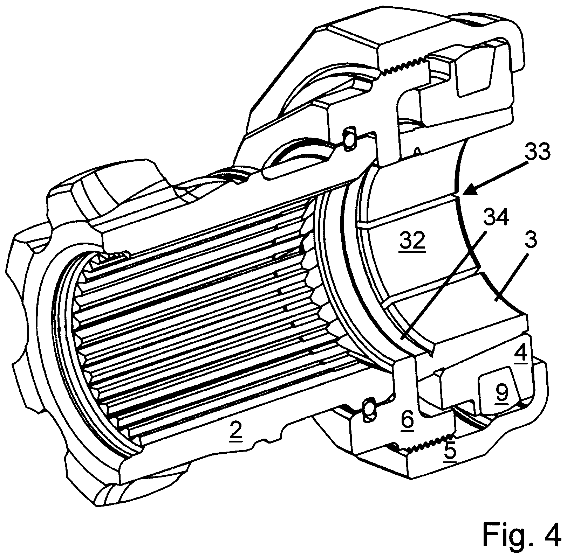

Die Fig. 4 schließlich zeigt die Variante der Fig. 1 ohne die Welle.

Zu sehen ist, dass der innere Ring 3 aus mehreren Segmenten 32 besteht, zwischen denen sich umlaufend jeweils eine Aussparung 33 befindet und die alle von einem gemeinsamen radial umlaufenden Basisabschnitt 34 ausgehen. Zu erkennen ist hier auch die radial umlaufende Nut, die sich zwischen dem Basisabschnitt 34 und den Segmenten 32 befindet. Die Segmente 32 erlauben es, hohe Klemmkräfte auf die Welle auszuüben, ohne dass eine Stützwirkung beim inneren Ring 3 eintritt.

## Patentansprüche

1. Verbindungsanordnung zum Verbinden einer Welle (1) mit einem Bauteil (2), mit einem inneren Ring (3), mit einem äußeren Ring (4), mit einer Überwurfmutter (5) und mit einem Gewindestück (6),
wobei der innere Ring (3) eine kegelige Außenfläche (30) aufweist,
wobei der äußere Ring (4) eine kegelige Innenfläche (40) aufweist,
wobei die kegelige Außenfläche (30) des inneren Rings (3) und die kegelige Innenfläche (40) des äußeren Rings (4) zueinander korrespondierend ausgestaltet sind, wobei der äußere Ring (4) den inneren Ring (3) umfasst,
wobei die Überwurfmutter (5) den äußeren Ring (4) umfasst,
wobei die Überwurfmutter (5) das Gewindestück (6) umfasst,
wobei die Überwurfmutter (5) ein Innengewinde (50) aufweist,
wobei das Gewindestück (6) ein Außengewinde (60) aufweist, und
wobei das Innengewinde (50) der Überwurfmutter (5) und das Außengewinde (60) des Gewindestücks (6) zueinander korrespondierend ausgestaltet sind.

2. Verbindungsanordnung nach Anspruch 1,
wobei das Gewindestück (6) den äußeren Ring (4) umfasst, und
wobei das Gewindestück (6) zwischen der Überwurfmutter (5) und dem äußeren Ring (4) angeordnet ist.

3. Verbindungsanordnung nach Anspruch 1 oder 2,
wobei die Überwurfmutter (5) beim Erzeugen einer Schraubverbindung mit dem Gewindestück (6) den äußeren Ring (4) axial entlang einer Längsachse (7) in Richtung des Gewindestücks (6) bewegt.

4. Verbindungsanordnung nach einem der Ansprüche 1 bis 3,
wobei das Gewindestück (6) eine Aussparung (65) zur Aufnahme eines Sicherungsrings (80) aufweist.

5. Verbindungsanordnung nach einem der Ansprüche 1 bis 4,
wobei der äußere Ring (4) entlang einer Längsachse (7) einen ersten Abschnitt (41) und einen zweiten Abschnitt (42) aufweist, und
wobei das Gewindestück (6) im Bereich des zweiten Abschnitts (42) zwischen dem äußeren Ring (4) und der Überwurfmutter (5) angeordnet ist.

6. Verbindungsanordnung nach einem der Ansprüche 1 bis 5,
wobei die Überwurfmutter (5) stirnseitig einen Endabschnitt (51) mit einer Aussparung (52) aufweist,
wobei ein Innendurchmesser der Aussparung (52) des Endabschnitts (51) kleiner als ein Innendurchmesser des Innengewindes (50) der Überwurfmutter (5) ist, wobei der äußere Ring (4) entlang einer Längsachse (7) einen ersten Abschnitt (41), einen zweiten Abschnitt (42) und einen dritten Abschnitt (43) aufweist, wobei entlang der Längsachse (7) der erste Abschnitt (41) zwischen dem zweiten Abschnitt (42) und dem dritten Abschnitt (43) liegt, und
wobei der dritte Abschnitt (43) des äußeren Rings (4) in von dem Gewindestück (6) abgewandter axialer Richtung über die Überwurfmutter (5) hinausragt.

7. Verbindungsanordnung nach Anspruch 6,
wobei der dritte Abschnitt (43) des äußeren Rings (4) eine Sicherungsring-Aussparung (44) für einen Sicherungsring (81) aufweist, und
wobei die Überwurfmutter (5) und der äußere Ring (4) entlang der Längsachse (7) axial gegeneinander gesichert sind.

8. Verbindungsanordnung nach einem der Ansprüche 1 bis 7,
wobei der äußere Ring (4) ein höheres E-Modul als der innere Ring (3) aufweist.

9. Verbindungsanordnung nach einem der Ansprüche 1 bis 8,
wobei der äußere Ring (4) eine Armierung (9) aufweist.

10. Verbindungsanordnung nach einem der Ansprüche 1 bis 9,
wobei der innere Ring (3) und das Gewindestück (6) einteilig ausgestaltet sind, und
wobei sich der äußere Ring (4) zwischen dem inneren Ring (3) und dem das Außengewinde (60) des Gewindestücks (6) tragenden Bereichs befindet.

11. Verbindungsanordnung nach einem der Ansprüche 1 bis 10,
wobei der innere Ring (3) mehrere umfänglich angeordnete Segmente (32) aufweist, die durch Längsaussparungen (33) voneinander getrennt sind.
